# EUROPEAN PATENT SPECIFICATION

(11) **EP 4 432 210 B1**
(45) Date of publication and mention of the grant of the patent: **08.07.2026**
(21) Application number: 23892910.3
(22) Date of filing: 06.03.2023
(51) Int. Cl.: G06T 1/20, G06T 1/60, G06F 9/54, G06F 9/50

(54) **DATA PROCESSING METHOD AND APPARATUS, ELECTRONIC DEVICE, AND COMPUTER-READABLE STORAGE MEDIUM**
DATENVERARBEITUNGSVERFAHREN UND -VORRICHTUNG, ELEKTRONISCHE VORRICHTUNG UND COMPUTERLESBARES SPEICHERMEDIUM
PROCÉDÉ ET APPAREIL DE TRAITEMENT DE DONNÉES, DISPOSITIF ÉLECTRONIQUE ET SUPPORT DE STOCKAGE LISIBLE PAR ORDINATEUR

(30) Priority: 23.11.2022 CN 202211471539
(43) Date of publication of application: 18.09.2024
(73) Proprietor: Hygon Information Technology Co., Ltd., Tianjin 300392 (CN)
(72) Inventor: ZUO, Hang, Tianjin 300392 (CN)
(74) Representative: Regimbeau
(86) International application number: PCT/CN2023/079753
(87) International publication number: WO 2024/108800

(56) References cited:
- EP-B1- 3 622 367
- CN-A- 104 461 467
- CN-A- 112 368 686
- CN-A- 112 527 514
- CN-A- 113 434 814
- CN-A- 114 327 926
- CN-A- 114 756 388
- KR-A- 20200 108 796
- US-A1- 2016 041 923
- BRITO RICARDO ET AL: "GPU-enabled back-propagation artificial neural network for digit recognition in parallel", THE JOURNAL OF SUPERCOMPUTING, SPRINGER US, NEW YORK, vol. 72, no. 10, 10 February 2016 (2016-02-10), pages 3868 - 3886, XP036074996, ISSN: 0920-8542, [retrieved on 20160210], DOI: 10.1007/S11227-016-1633-Y

## Description

### CROSS-REFERENCE TO RELATED APPLICATION

The present application claims the priority to Chinese Patent Application No. 202211471539.6, filed on November 23, 2022.

### TECHNICAL FIELD

Embodiments of the present disclosure relate to a data processing method, a data processing apparatus, an electronic device, and a computer-readable storage medium.

### BACKGROUND

With the development of computer technology, electronic devices are changing with each passing day, while the requirements for display technology are increasing, for example, the requirements for the processing capability of a GPU (graphics processing unit) are increasing. Because of the massively parallel processing capability of the GPU, more and more applications are now using the GPU for massively parallel computing. The GPU may include a plurality of parallel computing modules, and each of which can handle a plurality of threaded tasks.

KR 20200108796 A provides a method for executing a program in a heterogeneous cluster system. The method includes: receiving, at each of a plurality of computing devices included in the heterogeneous cluster system, a plurality of workgroups associated with a program assigned from a client node of the heterogeneous cluster system; and processing the plurality of assigned workgroups at each of the plurality of computing devices. Pages accessed by the plurality of workgroups are managed through virtual pages included in a virtual memory configured to provide a single memory address space in the heterogeneous cluster system.

### SUMMARY

The invention is set out in the appended set of claims.

### BRIEF DESCRIPTION OF THE DRAWINGS

In order to clearly illustrate the technical solution of the embodiments of the present disclosure, the drawings of the embodiments will be briefly described. It is obvious that the described drawings in the following are only related to some embodiments of the present disclosure and thus are not limitative of the present disclosure.
Fig. 1 illustrates a schematic diagram of a programming model for GPU computing provided by at least one embodiment of the present disclosure;
Fig. 2 illustrates a schematic diagram of a hardware architecture of a GPU provided by at least one embodiment of the present disclosure;
Fig. 3 illustrates a schematic diagram of a data processing apparatus provided by at least one embodiment of the present disclosure;
Fig. 4 illustrates a flowchart of a data processing method provided by at least one embodiment of the present disclosure;
Fig. 5 illustrates a flowchart of another data processing method provided by at least one embodiment of the present disclosure;
Fig. 6 illustrates a schematic diagram of a dispatching mode provided by at least one embodiment of the present disclosure;
Fig. 7 illustrates a schematic block diagram of an electronic device provided by some embodiments of the present disclosure;
Fig. 8 illustrates a schematic block diagram of another electronic device provided by some embodiments of the present disclosure; and
Fig. 9 illustrates a schematic diagram of a computer-readable storage medium provided by at least one embodiment of the present disclosure.

### DETAILED DESCRIPTION

In order to make objects, technical details and advantages of the embodiments of the present disclosure apparent, the technical solutions of the embodiments will be described in a clearly and fully understandable way in connection with the drawings related to the embodiments of the present disclosure. Apparently, the described embodiments are just a part but not all of the embodiments of the present disclosure. Based on the described embodiments herein, those skilled in the art can obtain other embodiment(s), without any inventive work, which should be within the scope of the disclosure.

Unless otherwise defined, all the technical and scientific terms used herein have the same meanings as commonly understood by one of ordinary skill in the art to which the present disclosure belongs. The terms "first," "second," etc., which are used in the description and the claims of the present application for disclosure, are not intended to indicate any sequence, amount, or importance, but distinguish various components. The terms "comprise," "comprising," "include," "including," "contain" etc., are intended to specify that the elements or the objects stated before these terms encompass the elements or the objects and equivalents thereof listed after these terms, but do not preclude the other elements or objects. The phrases "connect", "connected", etc., are not intended to define a physical connection or mechanical connection, but may include an electrical connection, directly or indirectly. "On," "under," "left," "right" and the like are only used to indicate relative position relationship, and when the position of the object which is described is changed, the relative position relationship may be changed accordingly.

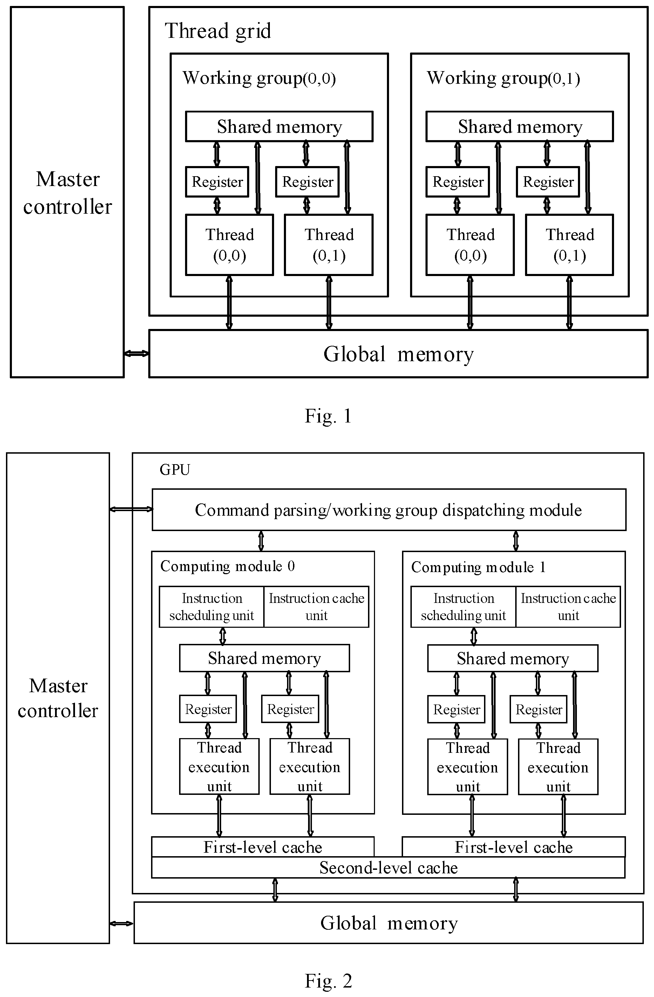

Fig. 1 illustrates a schematic diagram of a programming model for GPU computing provided by at least one embodiment of the present disclosure.

As illustrated in Fig. 1, a thread grid may be defined as a set of a plurality of working groups, such as a working group (0, 0) and a working group (0, 1) and so on. A working group can be understood as a thread group consisting of a plurality of threads that execute the same program code in a GPU. A working group may contain a plurality of threads executing in parallel, for example, the plurality of threads contained in each working group may include a thread (0, 0), a thread (0, 1), ... and so on. Each thread may use a private register correspondingly. A shared memory may further be defined in a working group, which is visible to all threads in the same working group, the shared memory can be understood as a memory that can be accessed by different threads in the working group. Through the shared memory, data transferring and data exchanging can be accomplished between different threads in the working group, thus improving data reusability.

Fig. 2 illustrates a schematic diagram of a hardware architecture of a GPU provided by at least one embodiment of the present disclosure.

As illustrated in Fig. 2, corresponding to a GPU programming model illustrated in Fig. 1, the hardware architecture of the GPU may have corresponding hardware modules. The hardware architecture may include a plurality of computing modules, including, for example, a computing module 0 and a computing module 1. The computing module is, for example, an ALU (Arithmetic Logic Unit), which is the smallest unit computing component in the GPU. Each computing module may include a shared memory and a plurality of parallel thread execution units, and the plurality of parallel thread execution units are connected to the shared memory for communication. The thread execution units are configured to execute threaded tasks, and each thread execution unit may execute one or more threaded tasks at the same time, for example, the same thread execution unit may be time-shared and complexed to execute a plurality of threaded tasks. A register (i.e., a private register for the thread) for temporary storage of data may be provided between the shared memory and the thread execution unit. Each computing module may further include an instruction scheduling unit and an instruction cache unit, the instruction scheduling unit may read an instruction from the instruction cache unit, and may further be responsible for instruction issuing, instruction dependency judgment, instruction jumping, and a part of instruction execution operations.

As illustrated in Fig. 2, in addition to the plurality of computing modules, the GPU may further include a plurality of first-level caches communicating with the thread execution units of the plurality of computing modules and a second-level cache communicating with the plurality of first-level caches, and the second-level cache communicates with a global memory external to the GPU. The global memory may be a device memory or a system memory. In some other embodiments, the GPU may further include other cache units such as a third-level cache. In addition, the GPU may further include a command parsing/working group dispatching module that communicates with the plurality of computing modules.

As illustrated in FIGS. 1 and 2, a master controller communicates with the global memory and the command parsing/working group dispatching module of the GPU, and the master controller may prepare operational data of a program and put it into the global memory, and may further issue command data of the program to the command parsing/working group dispatching module of the GPU through a driving program. After parsing the command, the command parsing/working group dispatching module may split the received thread grid into working groups and dispatch the working groups to the computing modules. There are a plurality of computing modules in the GPU, and according to a programming protocol, one working group can only run on one computing module. In some examples, one computing module is allowed to operate a plurality of working groups. Based on a data reading instruction, the GPU loads various types of data from the global memory first into caches of the GPU (e.g., the first-level caches and the second-level cache), and then from the caches (e.g., the first-level caches and the second-level cache) into the registers or into the shared memory of the computing module.

In the case where data stored in the shared memory is used for computation, compute components of the GPU can remain a busy state when a computational delay is greater than or equal to a delay for the next batch of data to be loaded from the global memory to the shared memory, and at this point, the GPU hardware has a highest utilization. Threads in a working group of the same computing module may exchange data through the shared memory to improve data reusability, but different computing modules are isolated from each other, and thus working groups running on different computing modules cannot access each other's shared memory. Even if the working groups execute the same instruction, the working groups do not necessarily have the same completion time because of variable response speed of memory access, which results in different working groups surviving in the GPU for a random period of time. Although theoretically these working groups can exchange data through the first-level caches or the second-level cache, because of randomness, it is difficult to control some assigned working groups to exchange data in the first-level caches or the second-level cache, and it is especially difficult to use the first-level caches to exchange data to achieve a purpose of reducing bandwidth of the second-level cache, and therefore, a data exchanging usually requires the global memory. Moreover, the second-level cache has a limited capacity, once the data cannot be found from the second-level cache, it is necessary to go to the global memory to read these data, and accordingly, the computing module needs to access the global memory frequently.

In order to keep the computational delay and a global data reading delay masked from each other, two types of instructions generally are bound according to a certain ratio and executes the instructions in a plurality of batches so as to accomplish some computational tasks. In order to improve performance of the GPU, the time for computing an instruction can be shortened by increasing a number of thread execution units in the computing module. In the case where the computational delay is smaller than the global data reading delay, in order to ensure that the thread execution units of the GPU can remain the busy state all the time, bandwidth between the computing module and the first-level caches or the second-level cache, or even bandwidth between the cache and the global memory can be increased to accelerate the data loading. However, a bandwidth increasing causes large hardware overhead, especially because of a long path for the GPU to access the global memory, a manufacturing cost of a chip is very high. Therefore, there is a need for a solution that can reduce a demand for bandwidth on the global memory reading path and increase data reading speed to further improve operational efficiency of the thread execution unit.

At least one embodiment of the present disclosure provides a data processing method, a data processing apparatus, an electronic device, and a computer-readable storage medium. The data processing method is used for the data processing apparatus, and the data processing apparatus includes a plurality of computing modules, each of the plurality of computing modules includes a plurality of thread execution units and a shared memory shared by the plurality of thread execution units, and the plurality of computing modules include a first computing module and a second computing module, the data processing method includes: directly transferring data to be interacted with between a first working group running on the first computing module and a second working group running on the second computing module through a data transferring channel established between a shared memory of the first computing module and a shared memory of the second computing module.

In the data processing apparatus, a direct reading access (i.e., the data transferring channel) is added between shared memories of different computing modules, and the data processing method utilizes the direct reading access (i.e., the data transferring channel) to realize direct data transferring between the working groups of different computing modules, without a detour from the first-level caches, the second-level cache, or even the global memory, a number of reading times to the global memory and numbers of reading times to the first-level caches and the second-level cache are reduced, a data reading path is shortened, the data reading speed is increased, the demand for bandwidth on the global memory reading path is reduced, and the data reading speed is accelerated without increasing the data transferring bandwidth, thereby improving operational efficiency of the thread execution units. In addition, the data reusability is further improved, the demand for access bandwidth is reduced, and the data processing apparatus can be controlled by software, which facilitates the control.

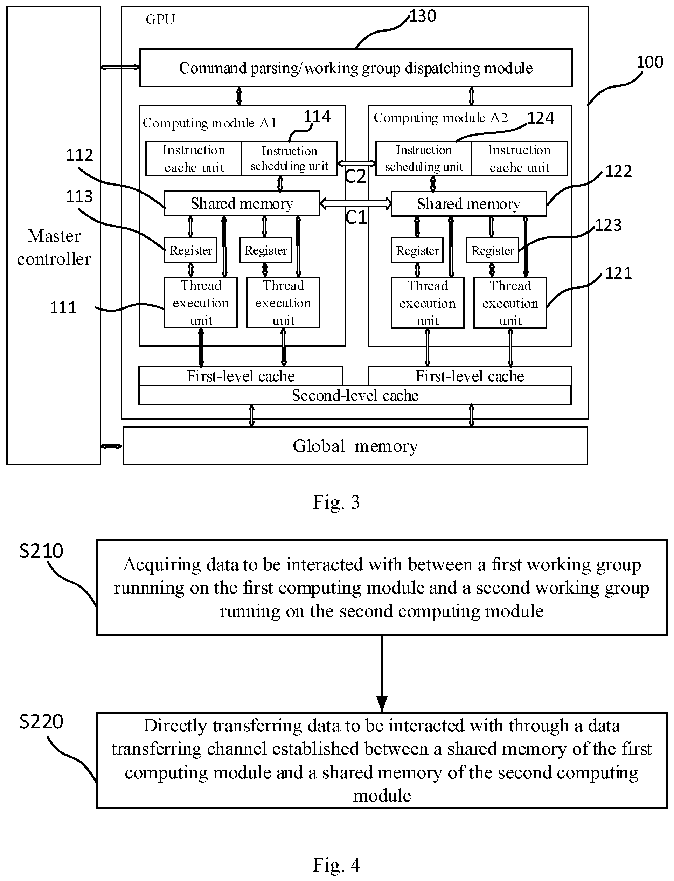

Fig. 3 illustrates a schematic diagram of a data processing apparatus provided by at least one embodiment of the present disclosure.

As illustrated in Fig. 3, the data processing apparatus may include a GPU. In other embodiments, the data processing apparatus may further include other data processors such as a CPU (central processing unit), and a TPU (Tensor Processing Unit). In the following embodiments, the GPU is used as an example for explanation. The data processing apparatus includes a plurality of computing modules, for example, includes a computing module A1, a computing module A2, and other parallel computing modules. Each computing module may include a plurality of thread execution units and a shared memory shared by the plurality of thread execution units, and the plurality of thread execution units may be executed in parallel. The shared memory may function as the shared memory described above. The plurality of thread execution units of the computing module may communicate with the shared memory so that a plurality of threads in a working group running on the computing module may exchange data through the shared memory. For example, the computing module A1 includes a plurality of thread execution units 111 and a shared memory 112 shared by the plurality of thread execution units 111, and the computing module A2 includes a plurality of thread execution units 121 and a shared memory 122 shared by the plurality of thread execution units 121.

For example, for ease of illustration, some embodiments of the present disclosure are illustrated with two computing modules. For example, the plurality of computing modules include a first computing module and a second computing module, and the first computing module and the second computing module may be any two of the plurality of computing modules. The following is illustrated as an example with the first computing module being, for example, the computing module A1 illustrated in Fig. 3, and the second computing module being, for example, the computing module A2 illustrated in Fig. 3. For example, one or more working groups may run on each of the first computing module and the second computing module, for example, the first working group runs on the first computing module, and for example, the second working group runs on the second computing module.

For example, a data transferring channel is established between share memories of at least two of the plurality of computing modules. For example, a data transferring channel is provided between at least the shared memory of the first computing module and the shared memory of the second computing module. As illustrated in Fig. 3, a data transferring channel C1 is established between the shared memory 112 of the computing module A1 and the shared memory 122 of the computing module A2. For example, the data transferring channel may perform data interaction by means of direct memory access (Direct memory access, DMA).

Fig. 4 illustrates a flowchart of a data processing method provided by at least one embodiment of the present disclosure.

As illustrated in Fig. 4, the method may include steps S210-S220.

Step S210: Acquiring data to be interacted with between a first working group running on the first computing module and a second working group running on the second computing module.

Step S220: Directly transferring the data to be interacted with through a data transferring channel established between a shared memory of the first computing module and a shared memory of the second computing module. For example, the data to be interacted with may be transferred directly from the shared memory of the first computing module to the shared memory of the second computing module through the data transferring channel, or be transferred directly from the shared memory of the second computing module to the shared memory of the first computing module through the data transferring channel.

For example, data interaction is required between different working groups. In one example, different working groups may share a data, for example, the first working group and the second working group share the same data. In this case, the computing module where the second working group is located may first read the data from other memory (e.g., the global memory), and then may share the data to the first working group, so that the first working group does not need to read the data from the global memory again. Therefore, the data to be interacted with in step S210 may be shared data between the first working group and the second working group. In another example, data synchronization is required between some of the working groups, for example, a computed result of the second working group needs to be synchronized to the first working group so that the first working group may perform a next computation based on the computed result of the second working group. Therefore, the data to be interacted with in step S210 may be data that needs to be synchronized between the first working group and the second working group.

For example, different working groups running on the same computing module may perform data interaction through the shared memory, and for working groups running on different computing modules, in step S210, the computing module (e.g., the first computing module and/or the second computing module) may acquire the data to be interacted with and store the data to be interacted with in the shared memory (e.g., the shared memory 112 of the first computing module and/or the shared memory 122 of the second computing module) of the computing module to prepare for step S220. For example, in the case where data of the second working group on the computing module A2 needs to be synchronized to the first working group on the computing module A1, the computing module A2 may acquire the data of the second working group and store it in the shared memory 122 of the computing module A2 to prepare for data transferring. In the case where the data to be interacted with is shared data, the computing module A2 may first read the shared data from other memory (e.g., the global memory) and store the shared data in the shared memory 122. In the case where the data to be interacted with is synchronized data, the computing module A2 may compute by the thread execution units to obtain the computed result of the second working group, and store the computed result in the shared memory 122.

For example, as illustrated in Fig. 3, the first computing module further 10 includes a first instruction scheduling unit 114, and the second computing module further includes a second instruction scheduling unit 124. In the case where data needs to be transferred from the second computing module to the first computing module, step S220 may include: sending, by the first instruction scheduling unit 114, an access instruction to the second instruction scheduling unit 124; sending, by the second instruction scheduling unit 124, a data transferring command to the shared memory 122 of the second computing module based on the access instruction; and sending, by the shared memory 122 of the second computing module, data corresponding to the access instruction to the shared memory 112 of the first computing module through the data transferring channel based on the data transferring command, where the data to be interacted with includes data corresponding to the access instruction.

As illustrated in Fig. 3, a command transferring channel C2 is established between the first instruction scheduling unit 114 and the second instruction scheduling unit 124. In the case where the shared memory 112 of the first computing module needs to access the shared memory 122 of the second computing module, the first instruction scheduling unit 114 sends the access instruction to the second instruction scheduling unit 122 through the command transferring channel C2. The access instruction may include information such as an access instruction, an access address, and an offset address. In the case where the access address is only a first address, an offset address is further required, and the two parts are combined to form an address actually to be accessed.

For example, after receiving the access instruction sent by the first command scheduling unit 114, the second command scheduling unit 124 may generate a data transferring command and send the data transferring command to the shared memory 122 of the second computing module, where the data transferring command may contain information such as an access address. The shared memory 122 of the second computing module may read the data from the corresponding address, in response to the data transferring command, and then send the reading data to the shared memory 112 of the first computing module through the data transferring channel between the share memories, and the first computing module writes the received data into the shared memory 112.

For example, in response to the shared memory 112 of the first computing module storing the data corresponding to the access instruction, the shared memory 112 of the first computing module transfers a data transferring completion message to the first instruction scheduling unit 114. For example, in some embodiments, the data transferring completion message may further be transferred to the second computing module.

For example, after the data is written into the shared memory 112 of the computing module A1, the shared memory 112 of the computing module A1 may send back a data transferring completion message to the first instruction scheduling unit 114 of the computing module A1, indicating that the current access instruction is executed.

For example, the access instruction is issued by the instruction scheduling unit, and after the instruction is issued, the instruction scheduling unit further needs to acquire an instruction execution completion message, so after the shared memory receives and writes the data, a data transferring completion message may be sent back to notify to the instruction scheduling unit, so that the instruction scheduling unit is notified of the instruction execution completion message. The instruction scheduling unit for instruction issuing is configured to receive the data transferring completion message, for example, in the case where the instruction scheduling unit of the computing module A1 issues an access instruction, then an instruction execution completion message is sent back to the instruction scheduling unit of the computing module A1 after the transferring of data accessed is completed. In the case where the access instruction is issued by the instruction scheduling unit of the computing module A2, then an instruction execution completion message is sent back to the instruction scheduling unit of the computing module A2 after the transferring of data accessed is completed.

In the data processing method of the embodiment of the present disclosure, direct data transferring between the working groups of different computing modules is realized by utilizing a direct reading access (that is, the data transferring channel) added between the shared memories of different computing modules, without a detour from the first-level caches, the second-level cache, or even the global memory. A number of reading times to the global memory and numbers of reading times to the first-level caches and the second-level cache are reduced, a data reading path is shortened, the data reading speed is increased, the demand for bandwidth on the global memory reading path is reduced, and the data reading speed is accelerated, thereby improving operational efficiency of the thread execution units.

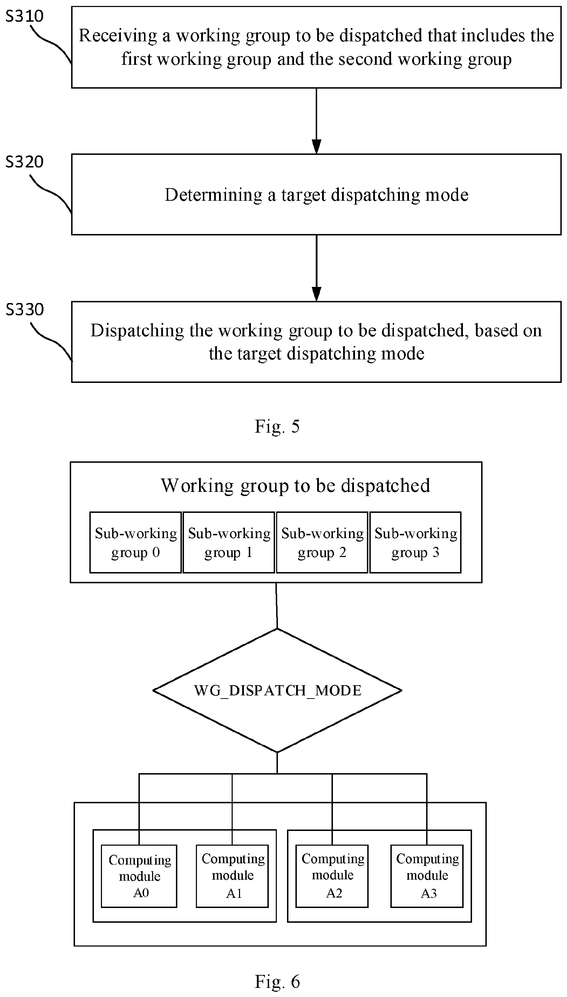

Fig. 5 illustrates a flowchart of another data processing method provided by at least one embodiment of the present disclosure.

As illustrated in Fig. 5, for example, in some embodiments, the data processing method may further include steps S310-S330.

Step S310: receiving a working group to be dispatched that includes the first working group and the second working group.

Step S320: determining a target dispatching mode.

Step S330: dispatching the working group to be dispatched, based on the target dispatching mode.

For example, the steps S310-S330 may be performed before the steps S210-S220 described above. For example, the working group to be dispatched that includes the first working group and the second working group may be dispatched first so that the first working group and the second working group are dispatched to the first computing module and the second computing module, respectively, and then the steps S210-S220 described above may be performed for the first computing module and the second computing module. Steps S310-S330 may be performed, for example, by a dispatching module, which may be, for example, a command parsing/working group dispatching module 130 illustrated in Fig. 3.

For example, in one programming protocol, the shared memory may only be allowed for performing data interaction in the same working group. The data interaction performed between the shared memory of the first computing module and the shared memory of the second computing module described above is considered to be data interaction performed by the shared memory, therefore, which also needs to be performed in the same working group. One solution is to change the programming protocol so that the shared memory is allowed for performing data interaction between different working groups, which increases labor and time costs. The embodiment of the present disclosure provides a solution: to realize the above solution of steps S210-S220 without changing the programming protocol, the first working group and the second working group that need to be dispatched to the different computing modules may be regarded as a large working group (i.e., the working group to be dispatched), that is, the first working group and the second working group may be regarded as two sub-working groups contained in a large working group. Moreover, the first computing module and the second computing module may be regarded as a large computing module, that is, the first computing module and the second computing module may be regarded as two sub-computing modules contained in a large computing module. The shared memory of the first computing module and the shared memory of the second computing module are regarded as a large shared memory, that is, the shared memory of the first computing module and the shared memory of the second computing module are regarded as two sub-shared memories contained in a large shared memory. In this way, in a case where data interaction is required between the first working group running on the first computing module and the second working group running on the second computing module, respectively, because the first working group and the second working group belong to a unified large working group, data transferring can be realized between the share memories to satisfy the programming protocol described above, and accordingly there is no need to change the programming protocol, which can save time and labor.

For example, in step S310, the working group to be dispatched may be received by the command parsing/working group dispatching module 30 in the GPU, and the command parsing/working group dispatching module 30 may divide the working group to be dispatched into the first working group (which may be regarded as a first sub-working group) and the second working group (which may be regarded as a second sub-working group), and dispatch them to the first computing module and the second computing module, respectively. After that, the data interaction between the first working group and the second working group can be realized in accordance with steps S210-S220.

For example, in some embodiments, other scenarios or other working groups to be dispatched may exist in addition to the above, and different scenarios or different types of working groups to be dispatched may have different requirements for the dispatching mode. Therefore, in addition to this dispatching mode of dispatching the working group to be dispatched to two computing modules, one or more other dispatching modes may further be set to satisfy the dispatch requirements of different scenarios or different working groups to be dispatched.

For example, at least two dispatching modes may be set, and the at least two dispatching modes include a first dispatching mode and a second dispatching mode, in the first dispatching mode, the working group to be dispatched is dispatched to one computing module of the plurality of computing modules, and in the second dispatching mode, the working group to be dispatched is dispatched to N computing modules of the plurality of computing modules, and a data transferring channel is provided between shared memories of at least some of the N computing modules to enable interaction between any two computing modules of the N computing modules through the data transferring channel, where N is a positive integer greater than 1.

For example, in the first dispatching mode, one working group to be dispatched is allowed to be dispatched to only one computing module. In the second dispatching mode, one working group to be dispatched is allowed to be dispatched to two or more computing modules. In some embodiments, the second dispatching mode may be further specified into a plurality of dispatching modes, each of which may specify a specific number of computing modules to be dispatched. For example, in one dispatching mode, one working group to be dispatched is allowed to be dispatched to two computing modules, and in another dispatching mode, one working group to be dispatched is allowed to be dispatched to four computing modules, and so on. For convenience in description, the second dispatching mode is utilized to generalize the plurality of dispatching modes in the embodiments of the present disclosure.

For example, in step S320, one of the at least two dispatching modes is determined as a target dispatching mode. In step S330, the working group to be dispatched is dispatched based on the target dispatching mode. For example, in the case where the target dispatching mode refers to the first dispatching mode, the working group to be dispatched is dispatched to one computing module; and in the case where the target dispatching mode refers to the second dispatching mode, the working group to be dispatched is dispatched to N computing modules.

For example, in some embodiments, a data transferring channel may be established between every two computing modules of the N computing modules so that direct data interaction is allowed between the shared memories of the every two computing modules. For example, the N computing modules include adjacent computing modules A1 to A4, and data transferring channels are respectively established between the computing modules A1 and A2, between the computing modules A1 and A3, between the computing modules A1 and A4, between the computing modules A2 and A3, between the computing modules A2 and A4, as well as between the computing modules A3 and A4.

For example, in some other embodiments, a data transferring channel may be established between some of those N computing modules, as long as it is ensured that every two computing modules may interact with each other either directly or indirectly, where "indirectly" means interacting through an intermediate computing module. For example, in the case where the N computing modules include adjacent computing modules A1toA4, it is sufficient to establish data transferring channels respectively between computing modules A1 and A2, between computing modules A2 and A3, as well as between computing modules A3 and A4, so that data interaction can be realized between every two computing modules. For example, in the case where data interaction is required between the computing module A1 and the computing module A3, data is first transferred from the computing module A1 (or the computing module A3) to the computing module A2 through the data transferring channel established between the computing module A1 and the computing module A2 (or A3 and A2), and then is transferred from the computing module A2 to the computing module A3 (or the computing module A1) through the data transferring channel established between the computing module A2 and the computing module A3 (or A1 and A2).

For example, the data processing apparatus may further include a mode controlling unit. The mode controlling unit may be implemented as a control circuit, and may be integrated in the command parsing/working group dispatching module 30. The mode controlling unit is configured to perform steps S310-S330 described above.

For example, in some embodiments, the dispatching mode may be selected based on attributes of the working group to be dispatched itself. Step S320 may include: acquiring configuration information of the working group to be dispatched; and selecting a dispatching mode matching the configuration information from at least two dispatching modes as the target dispatching mode.

For example, the configuration information may include a number of threads of the working group to be dispatched and/or an amount of data processed by each thread of the working group to be dispatched.

For example, in the case where the number of threads of the working group to be dispatched is not greater than a number threshold and/or the amount of data processed by each thread is not greater than a data volume threshold, the first dispatching mode is selected as the target dispatching mode. In the case where the number of threads of the working group to be dispatched is greater than a number threshold and/or the amount of data processed by each thread is greater than a data volume threshold, the second dispatching mode is selected as the target dispatching mode.

For example, in the second dispatching mode, the number of computing modules to be dispatched may further be determined based on the number of threads of the working group to be dispatched and/or the amount of data processed by each thread of the working group to be dispatched. For example, the number of computing modules to be dispatched is determined based on a ratio of the number of threads contained to the number threshold and/or a ratio of the amount of data processed by each thread to the data volume threshold.

For example, the number threshold is, for example, 1024, and the data volume threshold is, for example, an amount of data corresponding to one data cell of a matrix. Elements of the matrix may be divided into a plurality of data blocks. Each data block may be understood as a data unit. For example, for a 16*16 matrix, the matrix may be divided into sixteen 4*4 data blocks, and each 4*4 data block may be understood as a data unit. For example, in the case where the number of threads in some working group to be dispatched is 2048 and each thread performs computation on one data unit of the matrix, because the number of threads of the working group to be dispatched is two times the number threshold, the second dispatching mode is selected and the working group to be dispatched is dispatched to two computing modules. In the case where the number of threads in some working group to be dispatched is 1024 and each thread performs computation on two data units, because the amount of data processed for each thread in the working group to be dispatched is two times the data amount threshold, the second dispatching mode may be selected and the working group to be dispatched is dispatched to two computing modules.

For example, in some other embodiments, step S320 may include: acquiring mode selection information from a storage unit, where the mode selection information indicates a type of a dispatching mode selected by the user; and selecting a dispatching mode matching the dispatching mode selection information from the at least two dispatching modes as the target dispatching mode.

For example, the mode selection information may be set artificially. The data processing apparatus may further include a storage unit, which may, for example, be implemented as a register, hereinafter referred to as a mode register. The storage unit may be integrated in the command parsing/working group dispatching module 30. The storage unit is configured to store the mode selection information described above. The mode controlling unit may be further configured to select a dispatching mode matching the mode selection information from at least two dispatching modes as the target dispatching mode.

For example, the dispatching mode includes, for example:
Mode 0: A working group can only be dispatched to one computing module;
Mode 1: A working group is dispatched to two adjacent computing modules;
Mode 2: A working group is dispatched to four adjacent computing modules, and so on.

For example, the user may select one dispatching mode. In the case where the user sets mode 2, identification information of mode 2 may be stored in the mode register, and before dispatching the working group to be dispatched, the identification information of mode 2 may be read from the mode register to determine that mode 2 is the target dispatching mode, and then the working group to be dispatched may be dispatched based on mode 2.

It should be noted that the first dispatching mode refers to mode 0 and the second dispatching mode refers to both mode 1 and mode 2.

For example, in other embodiments, the user may configure a dispatching mode for a particular working group or some working groups to be dispatched and allow information about the set dispatching mode to be contained in the configuration information of the working group or working groups to be dispatched. That is, the dispatching mode for a particular working group or some working groups may be configured artificially. Before the working group is dispatched, the configuration information of the working group may be read first to determine the corresponding dispatching mode.

Fig. 6 illustrates a schematic diagram of a dispatching mode provided by at least one embodiment of the present disclosure.

As illustrated in Fig. 6, WG_DISPATCH_MODE indicates an added mode register. In the case where information stored in WG_DISPATCH_MODE indicates that a working group is dispatched to four computing modules, the working group to be dispatched may be divided into sub-working groups 0 to 3 and dispatched to computing modules A0 to A3 respectively.

For example, step S330 may include: in response to the target dispatching mode being the second dispatching mode, dividing the working group to be dispatched into N working groups; and dispatching the N working groups to the N computing modules respectively.

For example, the N working groups include a first working group and a second working group, and the N computing modules include a first computing module and a second computing module; that dispatching the N working groups to the N computing modules includes respectively: dispatching the first working group to the first computing module; and dispatching the second working group to the second computing module.

For example, the working group to be dispatched may be divided into N working groups equally, and "divided equally" may be understood as an average distribution of threads. For example, in the case where the working group to be dispatched contains 2048 threads, and in the case where the working group to be dispatched is divided into two working groups, for example, the first working group and the second working group, the first working group contains the same number of threads as the second working group, both containing 1024 threads. Then, the first working group may be dispatched to the first computing module and the second working group may be dispatched to the second computing module.

For example, that dispatching the N working groups to the N computing modules respectively may include: dividing the plurality of computing modules into module groups each including N computing modules; and dispatching the working group to be dispatched to the N computing modules contained in one of the module groups.

For example, in some embodiments, every adjacent N computing modules may be divided into one module group. For example, in the case where the GPU includes a total of ten computing modules from computing modules A1 to A10, and the current target dispatching mode is to dispatch a working group to two computing modules, then every two adjacent computing modules may be divided into one module group, for example, A1 and A2 form a first module group, and A3 and A4 form a second module group, and so on. The working group to be dispatched may be dispatched to one of the module groups, for example, to the first module group, specifically to the computing modules A1 and A2 contained in the first module group.

For example, in some other embodiments, among a plurality of computing modules that are idle currently, every N idle computing module serves as a module group in accordance with an arrangement order of the computing modules. For example, in the case where the GPU includes a total of ten computing modules from computing modules A1 to A10, and computing modules that are idle currently include computing modules A3, A4, A6, and A8, the computing modules A3 and A4 may serve as a first module group, the computing modules A6 and A8 may serve as a second module group, and the working group to be dispatched may then be dispatched to one of the module groups, for example, to the first module group, specifically to the computing modules A3 and A4 contained in the first module group.

For example, before dispatching the N working groups to the N computing modules respectively, it may be determined whether the N computing modules satisfy resource requirements of the N working groups first; in the case where the N computing modules satisfy the resource requirements of the N working groups, the N working groups are dispatched to the N computing modules respectively.

For example, each computing module further includes a plurality of registers. For each computing module, the plurality of registers interact with the shared memory and the plurality of thread execution units. As illustrated in Fig. 3, the computing module A1 includes a plurality of registers 113, the computing module A2 includes a plurality of registers 123, and the registers may correspond to the thread execution units one by one. For example, determining whether the N computing modules satisfy the resource requirements of the N working groups, may include: determining whether a number of registers contained in the N computing modules satisfies the number requirements of the N working groups; and/or determining whether a capacity of the shared memories contained in the N computing modules satisfies the capacity requirements of the N working groups.

For example, determining whether the number of registers contained in the N computing modules satisfies the number requirements of the N working groups includes: determining whether a total number of registers contained in the N computing modules is greater than or equal to the number of registers required for the working group to be dispatched; and/or, determining whether the number of registers contained in each of the N computing modules is greater than or equal to the number of registers required for a working group of the N working groups that is dispatched to the computing module.

For example, determining whether a capacity of the shared memories contained in the N computing modules satisfies the capacity requirements of the N working groups may include: determining whether a total capacity of the N share memories contained in the N computing modules is greater than or equal to a memory capacity required for the working group to be dispatched.

For example, in the case where the working group to be dispatched is dispatched to the first computing module and the second computing module, and the working group to be dispatched needs 100 registers and 16KB of memory resources, it is required that a total number of registers contained in the first computing module and the second computing module is not less than 100, and a sum of a remaining storage capacity of the shared memory of the first computing module and a remaining storage capacity of the shared memory of the second computing module is not less than 16 KB. In the case where the working group to be dispatched is divided equally into a first working group and a second working group, the first working group and the second working group each needs 50 registers, and the number of registers contained in each of the first computing module and the second computing module needs to be no less than 50. Because data transferring between the shared memory of the first computing module and the shared memory of the second computing module is available, it is sufficient that the total capacity of the shared memory of the first computing module and the shared memory of the second computing module satisfies the capacity requirements of the working group to be dispatched.

In order to make the share memories between different computing modules communicate with each other, the specialized shared memory data access and command access is established between the different computing modules in the embodiments of the present disclosure. According to the embodiments of the present disclosure, a working group may be dispatched to a plurality of computing modules, and by adding shared memory direct reading access(DMA) between the computing modules, direct data transferring between the computing modules is realized, thereby reducing the number of reading times to the global memory and reducing the demand for bandwidth on the global memory reading path.

While the first-level caches/second-level cache cannot be directly controlled for software, the shared memory can be controlled precisely by software. Because threads in a working group are visible to a software program, even if they are executed on different computing modules, the software program can schedule these computing modules uniformly to achieve data sharing.

A large working group is equivalent to a plurality of working groups. Compared to an original situation of inefficient data sharing among a plurality of working groups dispatched to different computing modules, the data processing method of the embodiment of the present disclosure can achieve precise data sharing in a more controllable manner through a large working group software program running on a plurality of computing modules, and can also facilitate controlling on access bandwidth reduction.

An embodiment of the present disclosure further provides a data processing apparatus. With reference to Fig. 3, the data processing apparatus 100 includes a plurality of computing modules, each of the plurality of computing modules including a plurality of thread execution units and a shared memory shared by the plurality of thread execution units. The plurality of computing modules include a first computing module and a second computing module, a data transferring channel is provided between a shared memory of the first computing module and a shared memory of the second computing module, and the data transferring channel is configured for directly transferring data to be interacted with between a first working group running on the first computing module and a second working group running on the second computing module.

For example, the data processing apparatus further includes a mode controlling unit. The mode controlling unit is configured to: receive a working group to be dispatched that includes the first working group and the second working group; determine a target dispatching mode; and dispatch the working group to be dispatched, based on the target dispatching mode.

For example, the data processing apparatus further includes a storage unit, where the storage unit is configured to store mode selection information, and the mode selection information indicates a type of a mode selected by a user. The mode controlling unit is further configured to select a dispatching mode matching the mode selection information from at least two dispatching modes as the target dispatching mode.

For example, the first computing module further includes a first instruction scheduling unit, and the second computing module further includes a second instruction scheduling unit. The first instruction scheduling unit is configured to send an access instruction to the second instruction scheduling unit; the second instruction scheduling unit is configured to send a data transferring command to the shared memory of the second computing module based on the access instruction; and the shared memory of the second computing module sends data corresponding to the access instruction to the shared memory of the first computing module through the data transferring channel based on the data transferring command, where the data to be interacted with includes the data corresponding to the access instruction.

For example, a command transferring channel is established between the first instruction scheduling unit and the second instruction scheduling unit, and the first instruction scheduling unit is configured to send the access instruction to the second instruction scheduling unit through the command transferring channel.

For example, the shared memory of the first computing module is configured to transfer a data transferring completion message to the first instruction scheduling unit, in response to the shared memory of the first computing module storing data corresponding to the access instruction.

The data processing apparatus 100 may refer to, for example, Fig. 3 to Fig. 6 and the above descriptions of the data processing apparatus, which will not be repeated herein.

Various components of the data processing apparatus may be interconnected through a bus system and/or other forms of connection mechanisms (not illustrated). These modules may be implemented, for example, by a hardware (e.g., circuit) module, a software module, or any combination of the two. The following embodiments are identical thereto and will not be repeated. For example, the units may be implemented by a central processing unit (CPU), a graphics processing unit (GPU), a tensor processing unit (TPU), a field-programmable gate array (FPGA), or other forms of processing units having data processing capabilities and/or instruction execution capabilities, as well as corresponding computer instructions. It should be noted that the components and structure of the data processing apparatus illustrated in Fig. 3 are merely exemplary and not limiting, and the data processing apparatus may also have other components and structures as needed.

For example, the various components of the data processing apparatus may be hardware, software, firmware, and any feasible combination thereof. For example, they may be specialized or general-purpose circuits, chips or devices, etc., or a combination of a processor and a memory. The embodiments of the present disclosure do not limit the specific implementation forms of the units described above.

For example, the various components of the data processing apparatus 100 may include codes and programs stored in the memory; the processor may execute the codes and programs to implement some or all of the functions of the various components of the data processing apparatus as described above. For example, the various components of the data processing apparatus 100 may be specialized hardware devices for implementing some or all of the functions of the various components of the data processing apparatus 100 as described above. For example, the various components of the data processing apparatus 100 may be a circuit board or a combination of a plurality of circuit boards for implementing the functions as described above. In the embodiment of the present disclosure, the one circuit board or combination of a plurality of circuit boards may include (1) one or more processors; (2) one or more non-transitory memories coupled to the processors; and (3) processor-executable firmware stored in the memories.

It is to be noted that in the embodiment of the present disclosure, the specific functions of the data processing apparatus 100 may be referred to the relevant descriptions of the data processing method and will not be repeated herein. The components and structure of the data processing apparatus 100 illustrated in Fig. 3 are merely exemplary and not limiting, and the data processing apparatus 100 may include other components and structure as needed. The data processing apparatus 100 may include more or fewer circuits or units, and the connection relationship between the individual circuits or units is not limited and may be defined according to actual needs. The specific way in which the individual circuits or units are constituted is not limited. The circuits or units each may be constituted by an analog device according to the circuit principle, or by a digital chip, or in other applicable ways.

At least one embodiment of the present disclosure further provides an electronic device. The electronic device includes a processor and a memory, and the memory stores one or more computer program modules. The one or more computer program modules are configured to be executed by the processor to implement the data processing method described above.

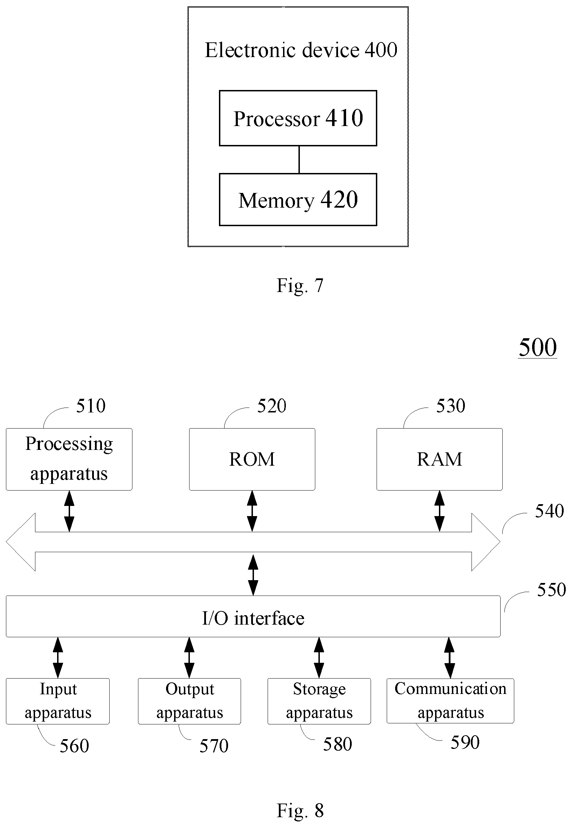

Fig. 7 illustrates a schematic block diagram of an electronic device provided by some embodiments of the present disclosure. As illustrated in Fig. 7, the electronic device 400 includes a processor 410 and a memory 420. The memory 420 stores non-transitory computer-readable instructions (e.g., one or more computer program modules). The processor 410 is configured to run the non-transitory computer-readable instructions, and the non-transitory computer-readable instructions, when run by the processor 410, may execute one or more steps according to the data processing method as described above. The memory 420 and the processor 410 may be interconnected through a bus system and/or other forms of connection mechanisms (not illustrated). Regarding the specific implementation and related explanations of each step of the data processing method, please refer to the above embodiments of the data processing method, and the repeated points will not be repeated herein.

It should be noted that the components of the electronic device 400 illustrated in Fig. 7 are only exemplary and not restrictive. The electronic device 400 may further have other components according to actual application requirements.

For example, the processor 410 and the memory 420 may communicate with each other directly or indirectly.

For example, the processor 410 and the memory 420 may communicate over a network. The network may include a wireless network, a wired network, and/or any combination of the wireless network and the wired network. The processor 410 and the memory 420 can also communicate with each other through a system bus, which is not limited by the present disclosure.

For example, the processor 410 and the memory 420 may be set up on the server side (or in the cloud).

For example, the processor 410 may control other components in the electronic device 400 to perform desired functions. For example, the processor 410 is a central processing unit (CPU), a graphics processing unit (GPU), or other forms of processing units having data processing capabilities and/or program execution capabilities. For example, the central processing unit (CPU) may be an X86 or ARM architecture, and the like. The processor 410 may be a general-purpose processor or a special-purpose processor, and can control other components in the electronic device 400 to perform desired functions.

For example, the memory 420 includes any combination of one or more computer program products, which may include various forms of computer-readable storage media, such as volatile memory and/or non-volatile memory. The volatile memory may include, for example, random access memory (RAM) and/or cache memory, etc. The non-volatile memory may include, for example, read-only memory (ROM), hard disk, erasable programmable read-only memory (EPROM), compact disk read-only memory (CD-ROM), USB memory, flash memory, and the like. One or more computer program modules may be stored on the computer-readable storage medium, and the processor 410 can execute one or more computer program modules to achieve various functions of the electronic device 400. Various application programs, various data, and various data used and/or generated by the application programs may also be stored in the computer-readable storage medium.

For example, in some embodiments, the electronic device 400 may be server, a cell phone, a tablet computer, a laptop computer, a wearable electronic device, and the like.

For example, the electronic device 400 may include a display panel, and the display panel may be a rectangular panel, a circular panel, an oval panel, or a polygonal panel, and the like. In addition, the display panel can be not only a flat panel, but also a curved panel or even a spherical panel.

For example, the electronic device 400 may have a touch function, that is, the electronic device 400 may be a touch device.

It should be noted that, in the embodiments of the present disclosure, the specific functions and technical effects of the electronic device 400 may refer to the above description about the data processing method, which will not be repeated here.

Fig. 8 illustrates a schematic block diagram of another electronic device provided by some embodiments of the present disclosure. The electronic device 500 is, for example, suitable for implementing the task processing method provided by the embodiments of the present disclosure. The electronic device 500 may be a terminal device or the like. It should be noted that the electronic device 500 illustrated in Fig. 8 is only an example.

As illustrated in Fig. 8, the electronic device 500 includes a processing apparatus 510 (such as a central processing unit, a graphics processing unit, etc.) that can perform various appropriate actions and processes in accordance with a program stored in read-only memory (ROM) 520 or loaded from a storage apparatus 580 into random access memory (RAM) 530. In the RAM 530, various programs and data required for the operation of the electronic device 500 are also stored. The processing apparatus 510, the ROM 520 and the RAM 530 are connected to each other through a bus 540. An input/output (I/O) interface 550 is also connected to the bus 540.

Usually, the following apparatus may be connected to the I/O interface 550: an input apparatus 560 including, for example, a touch screen, a touch pad, a keyboard, a mouse, a camera, a microphone, an accelerometer, a gyroscope, or the like; an output apparatus 570 including, for example, a liquid crystal display (LCD), a loudspeaker, a vibrator, or the like; the storage apparatus 580 including, for example, a magnetic tape, a hard disk, or the like; and a communication apparatus 590. The communication apparatus 590 may allow the electronic device 500 to be in wireless or wired communication with other devices to exchange data. While Fig. 8 illustrates the electronic device 500 having various apparatuses, it should be understood that not all of the illustrated apparatuses are necessarily implemented or included, and the electronic device 500 may alternatively implement or have more or fewer apparatuses.

For example, according to the embodiments of the present disclosure, the task processing method described above can be implemented as a computer software program. For example, the embodiments of the present disclosure include a computer program product, which includes a computer program carried by a non-transitory computer-readable medium, and the computer program includes program codes for performing the task processing method described above. In such embodiments, the computer program may be downloaded online through the communication apparatus 590 and installed, or may be installed from the storage apparatus 580, or may be installed from the ROM 520. In the case where the computer program is executed by the processing apparatus 510, the functions defined in the task processing method provided by the embodiments of the present disclosure can be achieved.

At least one embodiment of the present disclosure further provides a computer-readable storage medium for storing non-transitory computer-readable instructions, and in the case where the non-transitory computer-readable instructions are executed by a computer, the above-mentioned task processing method is achieved.

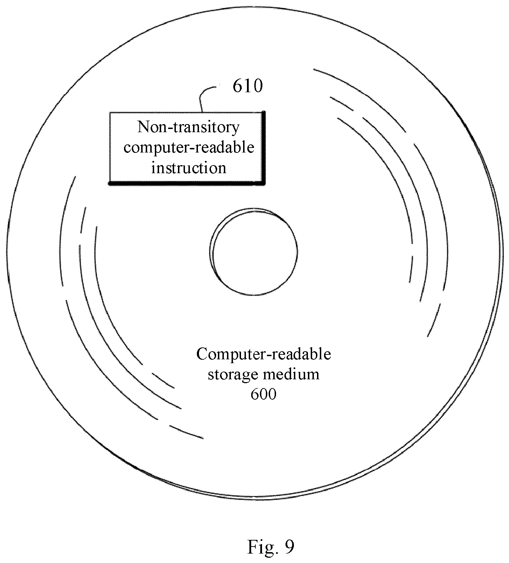

Fig. 9 illustrates a schematic diagram of a storage medium provided by some embodiments of the present disclosure. As illustrated in Fig. 9, the storage medium 600 is configured to store non-transitory computer-readable instructions 610. For example, in the case where the non-transitory computer-readable instructions 610 are executed by a computer, one or more steps in the task processing method described above may be performed.

For example, the storage medium 600 can be applied to the above-mentioned electronic device 400. For example, the storage medium 600 is the memory 420 in the electronic device 400 illustrated in Fig. 7. For example, the relevant descriptions about the storage medium 600 can refer to the corresponding descriptions of the memory 420 in the electronic device 400 illustrated in Fig. 7, which will not be repeated here.

Although Fig. 9 illustrates a computer system having various apparatus, it should be understood that the computer system is not required to have all of the apparatus illustrated, and the computer system may have more or less apparatus.

The above description is only the explanation of a partial embodiment of the present disclosure and the used technical principle.

In addition, although the operations are depicted in a specific order, this should not be understood as requiring these operations to be performed in the specific order illustrated or in a sequential order. Under certain circumstances, multitasking and parallel processing may be beneficial. Some features described in the context of separate embodiments may also be implemented in a single embodiment in combination.

The specific features and actions described above are only example forms of realizing the claims.

For the present disclosure, the following statements should be noted:
(1) The drawings involve only the structure(s) in connection with the embodiment(s) of the present disclosure, and other structure(s) can be referred to common design(s).
(2) In case of no conflict, features in one embodiment or in different embodiments can be combined to obtain new embodiments.

What have been described above are only specific implementations and the protection scope of the present disclosure should be based on the protection scope of the claims.

## Claims

1. A data processing method, for a data processing apparatus, wherein the data processing apparatus comprises a plurality of computing modules, each of the plurality of computing modules comprises a plurality of thread execution units and a shared memory of the plurality of thread execution units, and the plurality of computing modules comprise a first computing module (A1) and a second computing module (A2), the data processing method comprises:
directly transferring data to be interacted with between a first working group running on the first computing module (A1) and a second working group running on the second computing module (A2) through a data transferring channel (C1) established between a shared memory (112) of the first computing module (A1) and a shared memory (122) of the second computing module (A2),
wherein the first computing module (A1) further comprises a first instruction scheduling unit (114), and the second computing module (A2) further comprises a second instruction scheduling unit (124);
the directly transferring data to be interacted with between a first working group running on the first computing module (A1) and a second working group running on the second computing module (A2) through a data transferring channel (C1) established between a shared memory (112) of the first computing module (A1) and a shared memory (122) of the second computing module (A2), comprises:
sending an access instruction to the second instruction scheduling unit (124) by the first instruction scheduling unit (114);
sending a data transferring command to the shared memory (122) of the second computing module (A2) based on the access instruction by the second instruction scheduling unit (124); and
sending data corresponding to the access instruction to the shared memory (112) of the first computing module (A1) through the data transferring channel (C1) based on the data transferring command by the shared memory (122) of the second computing module (A2), wherein the data to be interacted with comprises the data corresponding to the access instruction;
wherein sending an access instruction to the second instruction scheduling unit (124) by the first instruction scheduling unit (114), comprises:
sending the access instruction to the second instruction scheduling unit (124)
through a command transferring channel (C2)
established between the first instruction scheduling unit (114) and the second instruction scheduling unit (124) by the first instruction scheduling unit (114).

2. The data processing method according to claim 1, wherein the data to be interacted with is shared data between the first working group and the second working group; or, wherein the data to be interacted with is data to be synchronized between the first working group and the second working group.

3. The data processing method according to any one of claims 1-2, wherein the data transferring channel (C1) performs data interaction by means of direct memory access;
optionally, wherein a number of threads contained in the first working group is the same as a number of threads contained in the second working group.

4. The data processing method according to any one of claims 1-3, further comprising:
receiving a working group to be dispatched that comprises the first working group and the second working group;
determining a target dispatching mode; and
dispatching the working group to be dispatched, based on the target dispatching mode.

5. The data processing method according to claim 4, wherein the determining a target dispatching mode, comprises:
acquiring configuration information of the working group to be dispatched; and
selecting a dispatching mode matching the configuration information from at least two dispatching modes as the target dispatching mode,
wherein the at least two dispatching modes comprise a first dispatching mode and a second dispatching mode, in the first dispatching mode, the working group to be dispatched is dispatched to one computing module of the plurality of computing modules, and in the second dispatching mode, the working group to be dispatched is dispatched to N computing modules of the plurality of computing modules, and a data transferring channel is provided between shared memories of at least some of the N computing modules to enable interaction between any two computing modules of the N computing modules through the data transferring channel,
wherein N is a positive integer greater than 1;
optionally, wherein the configuration information comprises a number of threads of the working group to be dispatched and/or an amount of data processed by each thread of the working group to be dispatched.

6. The data processing method according to claim 4, wherein the determining a target dispatching mode, comprises:
acquiring mode selection information from a storage unit, wherein the mode selection information indicates a type of a dispatching mode selected by a user; and
selecting a dispatching mode matching the dispatching mode selection information from the at least two dispatching modes as the target dispatching mode.

7. The data processing method according to any one of claims 4-6, wherein the dispatching the working group to be dispatched, based on the target dispatching mode, comprises:
in response to the target dispatching mode being the second dispatching mode, dividing the working group to be dispatched into N working groups; and
dispatching the N working groups to the N computing modules respectively;
optionally,
wherein the N working groups comprise the first working group and the second working group, and the N computing modules comprise the first computing module (A1) and the second computing module (A2);
the dispatching the N working groups to the N computing modules respectively, comprises:
dispatching the first working group to the first computing module (A1); and
dispatching the second working group to the second computing module (A2); or
wherein the dispatching the N working groups to the N computing modules respectively, comprises:
dividing the plurality of computing modules into module groups each including N computing modules; and
dispatching the working group to be dispatched to the N computing modules contained in one of the module groups.

8. The data processing method according to claim 7, wherein the dispatching the working group to be dispatched, based on the target dispatching mode, further comprises:
determining whether the N computing modules satisfy resource requirements of the N working groups before dispatching the N working groups to the N computing modules, respectively; and
dispatching the N working groups to the N computing modules respectively in a case where the N computing modules satisfy the resource requirements of the N working groups.

9. The data processing method according to claim 8, wherein each of the plurality of computing modules further comprises a plurality of registers, and for each of the computing modules, the plurality of registers interact with the shared memory and the plurality of thread execution units;
the determining whether the N computing modules satisfy resource requirements of the N working groups, comprises:
determining whether a number of registers contained in the N computing modules satisfies number requirements of the N working groups; and/or
determining whether a capacity of the shared memory contained in the N computing modules satisfies capacity requirements of the N working groups;
optionally, wherein the determining whether a number of registers contained in the N computing modules satisfies the number requirements of the N working groups, comprises at least one of the following:
determining whether a total number of registers contained in the N computing modules is greater than or equal to the number of registers required for the working group to be dispatched; and
determining whether the number of registers contained in each of the N computing modules is greater than or equal to the number of registers required for a working group of the N working groups that is dispatched to the computing module;
optionally, wherein the determining whether a capacity of the shared memory contained in the N computing modules satisfies the capacity requirements of the N working groups, comprises:
determining whether a total capacity of the N shared memories contained in the N computing modules is greater than or equal to a memory capacity required for the working group to be dispatched.

10. The data processing method according to any one of claims 1-9, wherein the directly transferring data to be interacted with between a first working group running on the first computing module (A1) and a second working group running on the second computing module (A2) through a data transferring channel (C1) established between a shared memory (112) of the first computing module (A1) and a shared memory (122) of the second computing module (A2), further comprises:
transferring a data transferring completion message to the first instruction scheduling unit (114) by the shared memory (112) of the first computing module (A1), in response to the shared memory (112) of the first computing module (A1) storing the data corresponding to the access instruction.

11. A data processing apparatus (100), comprising:
a plurality of computing modules, wherein each of the plurality of computing modules comprises a plurality of thread execution units and a shared memory shared by the plurality of thread execution units;
wherein the plurality of computing modules comprises a first computing module (A1) and a second computing module (A2), a data transferring channel (C1) is provided between a shared memory (112) of the first computing module (A1) and a shared memory (122) of the second computing module (A2), and the data transferring channel (C1) is configured for directly transferring data to be interacted with between a first working group running on the first computing module (A1) and a second working group running on the second computing module (A2) ,
wherein the first computing module (A1) further comprises a first instruction scheduling unit (114), and the second computing module (A2) further comprises a second instruction scheduling unit (124);
the data transferring channel (C1) is further configured for:
sending an access instruction to the second instruction scheduling unit (124) by the first instruction scheduling unit (114);
sending a data transferring command to the shared memory (122) of the second computing module (A2) based on the access instruction by the second instruction scheduling unit (124); and
sending data corresponding to the access instruction to the shared memory (112) of the first computing module (A1) through the data transferring channel (C1) based on the data transferring command by the shared memory (122) of the second computing module (A2), wherein the data to be interacted with comprises the data corresponding to the access instruction; and
wherein the data transferring channel (C1) is further configured for:
sending the access instruction to the second instruction scheduling unit (124) through a command transferring channel (C2) established between the first instruction scheduling unit (114) and the second instruction scheduling unit (124) by the first instruction scheduling unit (114).

12. The data processing apparatus according to claim 11, further comprising a mode controlling unit, wherein the mode controlling unit is configured to:
receive a working group to be dispatched that comprises the first working group and the second working group;
determine a target dispatching mode; and
dispatch the working group to be dispatched, based on the target dispatching mode;
optionally, the data processing apparatus further comprising a storage unit, wherein the storage unit is configured to store mode selection information, wherein the mode selection information indicates a type of a mode selected by a user; and
the mode controlling unit is further configured to select a dispatching mode matching the mode selection information from at least two dispatching modes as the target dispatching mode.

13. A computer-readable storage medium, storing non-transitory computer-readable instructions, the non-transitory computer-readable instruction when executed by a data processing apparatus according claim 11 implement the data processing method according to any one of claims 1-10.

## Patentansprüche

1. Ein Datenverarbeitungsverfahren für eine Datenverarbeitungsvorrichtung, wobei die Datenverarbeitungsvorrichtung aus einer Vielzahl von Rechenmodulen besteht, wobei jedes der Rechenmodule eine Vielzahl von Thread-Ausführungseinheiten und einen gemeinsamen Speicher der Vielzahl von Thread-Ausführungseinheiten umfasst, und die Vielzahl von Rechenmodulen ein erstes Rechenmodul (A1) und ein zweites Rechenmodul (A2) umfasst, wobei das Datenverarbeitungsverfahren Folgendes umfasst:
direktes Übertragen von Daten, mit denen zwischen einer ersten Arbeitsgruppe, die auf dem ersten Rechenmodul (A1) läuft, und einer zweiten Arbeitsgruppe, die auf dem zweiten Rechenmodul (A2) läuft, über einen Datenübertragungskanal (C1), der zwischen einem gemeinsamen Speicher (112) des ersten Rechenmoduls (A1) und einem gemeinsamen Speicher (122) des zweiten Rechenmoduls (A2) eingerichtet ist, interagiert werden soll,
wobei das erste Rechenmodul (A1) ferner eine erste Befehlsplanereinheit (114) umfasst, und das zweite Rechenmodul (A2) ferner eine zweite Befehlsplanereinheit (124) umfasst;
die direkt zu übertragenden Daten, mit denen zwischen einer ersten Arbeitsgruppe, die auf dem ersten Rechenmodul (A1) läuft, und einer zweiten Arbeitsgruppe, die auf dem zweiten Rechenmodul (A2) läuft, über einen Datenübertragungskanal (C1) interagiert werden soll, der zwischen einem gemeinsamen Speicher (112) des ersten Rechenmoduls (A1) und einem gemeinsamen Speicher (122) des zweiten Rechenmoduls (A2) eingerichtet ist, umfasst:
das Senden eines Zugriffsbefehls von der ersten Befehlsplanereinheit (114) an die zweite Befehlsplanereinheit (124);
das Senden eines Datenübertragungsbefehls an den gemeinsamen Speicher (122) des zweiten Rechenmoduls (A2) auf der Grundlage des Zugriffsbefehls von der zweiten Befehlsplanereinheit (124) und
das Senden von Daten, die dem Zugriffsbefehl (112) des ersten Rechenmoduls (A1) entsprechen, über den Datenübertragungskanal (C1) basierend auf dem Datenübertragungsbefehl durch den gemeinsamen Speicher (122) des zweiten Rechenmoduls (A2), wobei die zu interagierenden Daten jene Daten umfassen, welche dem Zugriffsbefehl entsprechen;
wobei das Senden eines Zugriffsbefehls an die zweite Befehlsplanereinheit (124) durch die erste Befehlsplanereinheit (114) umfasst:
das Senden des Zugriffsbefehls an die zweite Befehlsplanereinheit (124) über einen Befehlsübertragungskanal (C2), der zwischen der ersten Befehlsplanereinheit (114) und der zweiten Befehlsplanereinheit (124) durch die erste Befehlsplanereinheit (114) eingerichtet ist.

2. Das Datenverarbeitungsverfahren nach Anspruch 1, wobei die Daten, mit denen interagiert werden soll, gemeinsam genutzte Daten zwischen der ersten Arbeitsgruppe und der zweiten Arbeitsgruppe sind;
oder wobei die Daten, mit denen interagiert werden soll, Daten sind, die zwischen der ersten Arbeitsgruppe und der zweiten Arbeitsgruppe synchronisiert werden sollen.

3. Das Datenverarbeitungsverfahren gemäß einem der Ansprüche 1 bis 2, wobei der Datenübertragungskanal (C1) die Dateninteraktion mittels Direktzugriff auf den Speicher durchführt;
optional, wobei die Anzahl der in der ersten Arbeitsgruppe enthaltenen Threads der Anzahl der in der zweiten Arbeitsgruppe enthaltenen Threads entspricht.

4. Das Datenverarbeitungsverfahren gemäß einem der Ansprüche 1 bis 3, das ferner umfasst: den Empfang einer zu versendenden Arbeitsgruppe, welche die erste Arbeitsgruppe und die zweite Arbeitsgruppe umfasst;
Bestimmen eines Zielversandmodus und
Versand der zu versendenden Arbeitsgruppe, basierend auf dem Zielversandmodus.

5. Das Datenverarbeitungsverfahren gemäß Anspruch 4, wobei das Bestimmen eines Zielversandmodus umfasst:
das Erfassen von Konfigurationsinformationen der zu versendenden Arbeitsgruppe und
das Auswählen eines Versandmodus, der den Konfigurationsinformationen aus mindestens zwei Versandmodi als Zielversandmodus entspricht,
wobei die wenigstens zwei Versandmodi einen ersten Versandmodus und einen zweiten Versandmodus umfassen, wobei in dem ersten Versandmodus die zu sendende Arbeitsgruppe an ein Rechenmodul der mehreren Rechenmodule gesendet wird und in dem zweiten Versandmodus die zu sendende Arbeitsgruppe an n Rechenmodule der mehreren Rechenmodule gesendet wird, und ein Datenübertragungskanal zwischen gemeinsamen Speichern wenigstens einiger der *n* Rechenmodule vorgesehen ist, um eine Interaktion zwischen beliebigen zwei Rechenmodulen der *n* Rechenmodule über den Datenübertragungskanal zu ermöglichen,
wobei *n* eine positive ganze Zahl größer 1 ist;
optional, wobei die Konfigurationsinformationen eine Anzahl von Threads der zu versendenden Arbeitsgruppe und/oder eine Menge von Daten umfassen, die von jedem Thread der zu versendenden Arbeitsgruppe verarbeitet werden.

6. Das Datenverarbeitungsverfahren gemäß Anspruch 4, wobei das Bestimmen eines Zielversandmodus umfasst:
das Erfassen von Moduswahlinformationen von einer Speichereinheit, wobei die Modusauswahlinformationen einen Typ eines von einem Nutzer ausgewählten Versandmodus angeben; und
das Auswählen eines Versandmodus, der den Versandmodusausahlinformationen aus den wenigstens zwei Versandmodi als Zielversandmodus entspricht.

7. Das Datenverarbeitungsverfahren gemäß einem der Ansprüche 4 bis 6, wobei das Versenden der zu versendenden Arbeitsgruppe, basierend auf dem Zielversandmodus, umfasst:
als Reaktion darauf, dass der Zielversandmodus der zweite Versandmodus ist, das Aufteilen der zu versendenden Arbeitsgruppe in *n* Arbeitsgruppen und
das Versenden der *n* Arbeitsgruppen an die jeweiligen *n* Rechenmodule; optional,
wobei die *n* Arbeitsgruppen die erste Arbeitsgruppe und die zweite Arbeitsgruppe umfassen, und die *n* Rechenmodule das erste Rechenmodul (A1) und das zweite Rechenmodul (A2) umfassen;
das Versenden der *n* Arbeitsgruppen jeweils an die *n* Rechenmodule umfasst:
das Versenden der ersten Arbeitsgruppe an das erste Rechenmodul (A1) und
das Versenden der zweiten Arbeitsgruppe an das zweite Rechenmodul (A2); oder wobei das Versenden der *n* Arbeitsgruppen an die n Rechenmodule jeweils umfasst:
das Aufteilen der mehreren Rechenmodule in Modulgruppen, die jeweils *n* Rechenmodule umfassen; und
das Versenden der zu versendenden Arbeitsgruppe an die *n* Rechenmodule, welche in einer der Modulgruppen enthalten sind.

8. Das Datenverarbeitungsverfahren gemäß Anspruch 7, wobei das Versenden der zu versendenden Arbeitsgruppe, basierend auf dem Zielversendungsmodus, ferner umfasst:
das Feststellen, ob die *n* Rechenmodule den Ressourcenbedarf der *n* Arbeitsgruppen erfüllen, bevor die *n* Arbeitsgruppen an die *n* Rechenmodule gesendet werden; und
das Versenden der *n* Arbeitsgruppen an die n Rechenmodule jeweils in einem Fall, in dem die n Rechenmodule den Ressourcenbedarf der *n* Arbeitsgruppen erfüllen.

9. Das Datenverarbeitungsverfahren nach Anspruch 8, wobei jedes der mehreren Rechenmodule ferner eine Vielzahl von Registern umfasst, und für jedes der Rechenmodule die Vielzahl von Registern mit dem gemeinsamen Speicher und den mehreren Ausführungseinheiten für Threads interagiert;
das Feststellen, ob die *n* Rechenmodule den Ressourcenbedarf der *n* Arbeitsgruppen erfüllen, umfasst:
das Feststellen, ob eine Anzahl von Registern, die in den *n* Rechenmodulen enthalten sind, die Anzahlanforderungen der *n* Arbeitsgruppen erfüllt; und/oder
das Feststellen, ob eine Kapazität des in den *n* Rechenmodulen enthaltenen gemeinsamen Speichers den Kapazitätsanforderungen der *n* Arbeitsgruppen entspricht;
optional, wobei das Feststellen, ob eine Anzahl von Registern, die in den *n* Rechenmodulen enthalten sind, die Anzahlanforderungen der *n* Arbeitsgruppen erfüllt, mindestens eines der folgenden umfasst:
das Feststellen, ob eine in den *n* Rechenmodulen enthaltene Gesamtanzahl von Registern größer oder gleich der Anzahl von Registern ist, die für die zu versendende Arbeitsgruppe erforderlich ist, und
das Feststellen, ob die Anzahl der in jedem der *n* Rechenmodule enthaltenen Register größer oder gleich der Anzahl der Register ist, die für eine Arbeitsgruppe der *n* Arbeitsgruppen erforderlich ist, die an das Rechenmodul gesendet wird;
optional, wobei das Feststellen, ob eine Kapazität des in den *n* Rechenmodulen enthaltenen gemeinsamen Speichers die Kapazitätsanforderungen der *n* Arbeitsgruppen erfüllt, umfasst:
das Feststellen, ob eine Gesamtkapazität der in den *n* Rechenmodulen enthaltenen *n* gemeinsamen Speicher größer oder gleich einer Speicherkapazität ist, die für die zu versendende Arbeitsgruppe benötigt wird.

10. Das Datenverarbeitungsverfahren gemäß einem der Ansprüche 1 bis 9, wobei die direkt zu übertragenden Daten, mit denen interagiert werden soll, die zwischen einer ersten Arbeitsgruppe, die auf dem ersten Rechenmodul (A1) läuft, und einer zweiten Arbeitsgruppe, die auf dem zweiten Rechenmodul (A2) läuft, über einen Datenübertragungskanal (C1) übertragen werden, der zwischen einem gemeinsamen Speicher (112) des ersten Rechenmoduls (A1) und einem gemeinsamen Speicher (122) des zweiten Rechenmoduls (A2) eingerichtet ist, ferner umfasst:
das Übertragen einer Fertigmeldung zur Übertragung von Daten an die erste Befehlsplanereinheit (114) durch den gemeinsamen Speicher (112) des ersten Rechenmoduls (A1) als Reaktion auf den gemeinsamen Speicher (112) des ersten Rechenmoduls (A1), in welchem die dem Zugriffsbefehl entsprechenden Daten gespeichert sind.

11. Eine Datenverarbeitungsvorrichtung (100), umfassend:
eine Vielzahl von Rechenmodulen, wobei jedes der Vielzahl von Rechenmodulen eine Vielzahl von Thread-Ausführungseinheiten und einen von der Vielzahl von Thread-Ausführungseinheiten gemeinsam genutzten gemeinsamen Speicher umfasst;
wobei die Vielzahl von Rechenmodulen ein erstes Rechenmodul (A1) und ein zweites Rechenmodul (A2) umfasst, ein Datenübertragungskanal (C1) zwischen einem gemeinsamen Speicher (112) des ersten Rechenmoduls (A1) und einem gemeinsamen Speicher (122) des zweiten Rechenmoduls (A2) vorgesehen ist, und der Datenübertragungskanal (C1) so eingerichtet ist, dass er zur direkten Übertragung von Daten dient, mit denen zwischen einer ersten Arbeitsgruppe, die auf dem ersten Rechenmodul (A1) läuft, und einer zweiten Arbeitsgruppe, die auf dem zweiten Rechenmodul (A2) läuft, interagiert werden soll;
wobei das erste Rechenmodul (A1) ferner eine erste Befehlsplanereinheit (114) umfasst, und das zweite Rechenmodul (A2) ferner eine zweite Befehlsplanereinheit (124) umfasst;
und der Datenübertragungskanal (C1) ferner eingerichtet ist für:
das Senden eines Zugriffsbefehls von der ersten Befehlsplanereinheit (114) an die zweite Befehlsplanereinheit (124);
das Senden eines Datenübertragungsbefehls an den gemeinsamen Speicher (122) des zweiten Rechenmoduls (A2) auf der Grundlage des Zugriffsbefehls von der zweiten Befehlsplanereinheit (124) und
das Senden von Daten, die dem Zugriffsbefehl (112) des ersten Rechenmoduls (A1) entsprechen, über den Datenübertragungskanal (C1) basierend auf dem Datenübertragungsbefehl durch den gemeinsamen Speicher (122) des zweiten Rechenmoduls (A2), wobei die zu interagierenden Daten die dem Zugriffsbefehl entsprechenden Daten umfassen, und
wobei der Datenübertragungskanal (C1) ferner eingerichtet ist für:
das Senden des Zugriffsbefehls an die zweite Befehlsplanereinheit (124) über einen Befehlsübertragungskanal (C2), der zwischen der ersten Befehlsplanereinheit (114) und der zweiten Befehlsplanereinheit (124) durch die erste Befehlsplanereinheit (114) eingerichtet ist.

12. Die Datenverarbeitungsvorrichtung nach Anspruch 11, die ferner eine Modussteuereinheit umfasst, wobei die Modussteuereinheit so eingerichtet ist, um:
eine zu verteilende Arbeitsgruppe zu empfangen, welche die erste Arbeitsgruppe und die zweite Arbeitsgruppe umfasst
einen Zielversandmodus zu bestimmen und
die zu sendende Arbeitsgruppe je nach Zielversandmodus zu senden;
optional, wobei die Datenverarbeitungsvorrichtung ferner eine Speichereinheit umfasst, wobei die Speichereinheit zum Speichern von Modusauswahlinformationen eingerichtet ist, wobei die Modusauswahlinformationen einen Typ eines von einem Nutzer ausgewählten Modus angeben; und
die Modussteuereinheit ferner so eingerichtet ist, dass sie als Zielversandmodus einen mit den Modusauswahlinformationen übereinstimmenden Versandmodus aus wenigstens zwei Versandmodi auswählt.

13. Ein computerlesbares Speichermedium, das nicht flüchtige, computerlesbare Befehle speichert, wobei die nicht flüchtigen, computerlesbaren Befehle, wenn sie von einem Datenverarbeitungsgerät gemäß Anspruch 11 ausgeführt werden, das Datenverarbeitungsverfahren gemäß einem der Ansprüche 1 bis 10 implementieren.

## Revendications

1. Procédé de traitement de données destiné à un appareil de traitement de données, dans lequel l'appareil de traitement de données comprend une pluralité de modules de calcul, chacun des modules de calcul de la pluralité comprend une pluralité d'unités d'exécution de fils d'exécution et une mémoire partagée pour la pluralité d'unités d'exécution de fils d'exécution, et la pluralité de modules de calcul comprend un premier module de calcul (A1) et un deuxième module de calcul (A2), le procédé de traitement de données comprenant :
le transfert direct de données devant faire l'objet d'une interaction entre un premier groupe de travail s'exécutant sur le premier module de calcul (A1) et un deuxième groupe de travail s'exécutant sur le deuxième module de calcul (A2) par l'intermédiaire d'un canal de transfert de données (C1) établi entre une mémoire partagée (112) du premier module de calcul (A1) et une mémoire partagée (122) du deuxième module de calcul (A2),
dans lequel le premier module de calcul (A1) comprend en outre une première unité de planification d'instructions (114), et le deuxième module de calcul (A2) comprend en outre une deuxième unité de planification d'instructions (124) ;
le transfert direct des données devant faire l'objet d'une interaction entre un premier groupe de travail s'exécutant sur le premier module de calcul (A1) et un deuxième groupe de travail s'exécutant sur le deuxième module de calcul (A2) via un canal de transfert de données (C1) établi entre une mémoire partagée (112) du premier module de calcul (A1) et une mémoire partagée (122) du deuxième module de calcul (A2), comprend :
l'envoi d'une instruction d'accès à la deuxième unité de planification d'instructions (124) par la première unité de planification d'instructions (114) ;
l'envoi d'une commande de transfert de données vers la mémoire partagée (122) du deuxième module de calcul (A2) sur la base de l'instruction d'accès par la deuxième unité de planification d'instructions (124) ; et
l'envoi de données correspondant à l'instruction d'accès vers la mémoire partagée (112) du premier module de calcul (A1) via le canal de transfert de données (C1) sur la base de la commande de transfert de données par la mémoire partagée (122) du deuxième module de calcul (A2) dans lequel les données devant faire l'objet d'une interaction comprennent les données correspondant à l'instruction d'accès ;
dans lequel l'envoi d'une instruction d'accès à la deuxième unité de planification d'instructions (124) par la première unité de planification d'instructions (114) comprend :
l'envoi de l'instruction d'accès à la deuxième unité de planification d'instructions (124) par l'intermédiaire d'un canal de transfert de commandes (C2) établi entre la première unité de planification d'instructions (114) et la deuxième unité de planification d'instructions (124) par la première unité de planification d'instructions (114).

2. Procédé de traitement de données selon la revendication 1, dans lequel les données devant faire l'objet d'une interaction sont des données partagées entre le premier groupe de travail et le deuxième groupe de travail ;
ou dans lequel les données devant faire l'objet d'une interaction sont des données devant être synchronisées entre le premier groupe de travail et le deuxième groupe de travail.

3. Procédé de traitement de données selon l'une quelconque des revendications 1 à 2, dans lequel le canal de transfert de données (C1) effectue l'interaction de données au moyen d'un accès direct à la mémoire ;
optionnellement, dans lequel le nombre de fils d'exécution contenus dans le premier groupe de travail est identique au nombre de fils d'exécution contenus dans le deuxième groupe de travail.

4. Procédé de traitement de données selon l'une quelconque des revendications 1 à 3, comprenant en outre :
la réception d'un groupe de travail à répartir qui comprend le premier groupe de travail et le deuxième groupe de travail ;
la détermination d'un mode de répartition cible ; et
la répartition du groupe de travail à répartir, sur la base du mode de répartition cible.

5. Procédé de traitement de données selon la revendication 4, dans lequel la détermination d'un mode de répartition cible comprend :
l'acquisition d'informations de configuration du groupe de travail à déployer ; et
la sélection, parmi au moins deux modes de répartition, d'un mode de répartition correspondant aux informations de configuration en tant que mode de répartition cible,
dans lequel les au moins deux modes de répartition comprennent un premier mode de répartition et un deuxième mode de répartition, dans le premier mode de répartition, le groupe de travail à répartir est réparti vers un module de calcul parmi la pluralité de modules de calcul, et dans le deuxième mode de répartition, le groupe de travail à répartir est réparti vers N modules de calcul parmi la pluralité de modules de calcul, et un canal de transfert de données est prévu entre les mémoires partagées d'au moins certains des N modules de calcul afin de permettre l'interaction entre deux modules de calcul quelconques parmi les N modules de calcul via le canal de transfert de données,
où N est un entier positif supérieur à 1 ;
optionnellement, dans lequel les informations de configuration comprennent un nombre de fils d'exécution du groupe de travail à répartir et/ou une quantité de données traitées par chaque fil d'exécution du groupe de travail à répartir.

6. Procédé de traitement de données selon la revendication 4, dans lequel la détermination d'un mode de répartition cible comprend :
l'acquisition d'informations de sélection de mode à partir d'une unité de stockage, lesdites informations de sélection de mode indiquant un type de mode de répartition sélectionné par un utilisateur ; et
la sélection, parmi les au moins deux modes de répartition, d'un mode de répartition correspondant aux informations de sélection de mode de répartition en tant que mode de répartition cible.

7. Procédé de traitement de données selon l'une quelconque des revendications 4 à 6, dans lequel la répartition du groupe de travail à répartir, sur la base du mode de répartition cible, comprend :
en réponse au fait que le mode de répartition cible est le deuxième mode de répartition, la division du groupe de travail à répartir en N groupes de travail ; et
l'affectation des N groupes de travail aux N modules de calcul respectivement; optionnellement,
dans lequel les N groupes de travail comprennent le premier groupe de travail et le deuxième groupe de travail, et les N modules de calcul comprennent le premier module de calcul (A1) et le deuxième module de calcul (A2) ;
l'affectation des N groupes de travail aux N modules de calcul respectivement comprend :
la répartition du premier groupe de travail vers le premier module de calcul (A1) ; et
l'affectation du deuxième groupe de travail au deuxième module de calcul (A2) ; ou
dans lequel l'affectation des N groupes de travail aux N modules de calcul respectivement comprend :
la division de la pluralité de modules de calcul en groupes de modules comprenant chacun N modules de calcul ; et
affecter le groupe de travail aux N modules de calcul contenus dans l'un des groupes de modules.

8. Procédé de traitement de données selon la revendication 7, dans lequel l'affectation du groupe de travail à affecter, sur la base du mode d'affectation cible, comprend en outre:
déterminer si les N modules de calcul satisfont des exigences en matière de ressources des N groupes de travail avant d'affecter les N groupes de travail aux N modules de calcul, respectivement ; et
l'affectation des N groupes de travail aux N modules de calcul respectivement dans le cas où les N modules de calcul satisfont aux exigences en matière de ressources des N groupes de travail.

9. Procédé de traitement de données selon la revendication 8, dans lequel chacun des modules de calcul comprend en outre une pluralité de registres, et pour chacun des modules de calcul, la pluralité de registres interagit avec la mémoire partagée et la pluralité d'unités d'exécution de fils d'exécution ;
la détermination du fait que les N modules de calcul satisfont aux exigences en ressources des N groupes de travail comprend :
déterminer si un nombre de registres contenus dans les N modules de calcul satisfait aux exigences de nombre des N groupes de travail ; et/ou
déterminer si une capacité de la mémoire partagée contenue dans les N modules de calcul satisfait aux exigences de capacité des N groupes de travail ;
optionnellement, dans lequel la détermination visant à établir si un nombre de registres contenus dans les N modules de calcul satisfait aux exigences en matière de nombre des N groupes de travail comprend au moins l'une des étapes suivantes :
déterminer si le nombre total de registres contenus dans les N modules de calcul est supérieur ou égal au nombre de registres requis pour le groupe de travail à répartir ; et
déterminer si le nombre de registres contenus dans chacun des N modules de calcul est supérieur ou égal au nombre de registres requis pour un groupe de travail parmi les N groupes de travail qui est affecté au module de calcul ;
optionnellement, dans lequel la détermination visant à établir si une capacité de la mémoire partagée contenue dans les N modules de calcul satisfait aux exigences de capacité des N groupes de travail comprend :
déterminer si la capacité totale des N mémoires partagées contenues dans les N modules de calcul est supérieure ou égale à la capacité de mémoire requise pour le groupe de travail à répartir.

10. Procédé de traitement de données selon l'une quelconque des revendications 1 à 9, dans lequel le transfert direct des données devant faire l'objet d'une interaction entre un premier groupe de travail s'exécutant sur le premier module de calcul (A1) et un deuxième groupe de travail s'exécutant sur le deuxième module de calcul (A2) s'effectue par l'intermédiaire d'un canal de transfert de données (C1) établi entre une mémoire partagée (112) du premier module de calcul (A1) et une mémoire partagée (122) du deuxième module de calcul (A2), comprend en outre :
le transfert d'un message d'achèvement de transfert de données vers la première unité de planification d'instructions (114) par la mémoire partagée (112) du premier module de calcul (A1), en réponse à une instruction d'accès, la mémoire partagée (112) du premier module de calcul (A1) stockant les données correspondant à l'instruction d'accès.

11. Appareil de traitement de données (100), comprenant :
une pluralité de modules de calcul, dans laquelle chacun des modules de calcul de la pluralité comprend une pluralité d'unités d'exécution de fils d'exécution et une mémoire partagée par la pluralité d'unités d'exécution de fils d'exécution ;
dans lequel la pluralité de modules de calcul comprend un premier module de calcul (A1) et un deuxième module de calcul (A2), un canal de transfert de données (C1) est prévu entre une mémoire partagée (112) du premier module de calcul (A1) et une mémoire partagée (122) du deuxième module de calcul (A2), et le canal de transfert de données (C1) est configuré pour transférer directement des données devant faire l'objet d'une interaction entre un premier groupe de travail s'exécutant sur le premier module de calcul (A1) et un deuxième groupe de travail s'exécutant sur le deuxième module de calcul (A2),
dans lequel le premier module de calcul (A1) comprend en outre une première unité de planification d'instructions (114), et le deuxième module de calcul (A2) comprend en outre une deuxième unité de planification d'instructions (124) ;
le canal de transfert de données (C1) est en outre configuré pour :
envoyer une instruction d'accès à la deuxième unité de planification d'instructions (124) par la première unité de planification d'instructions (114) ;
envoyer une commande de transfert de données à la mémoire partagée (122) du deuxième module de calcul (A2) sur la base de l'instruction d'accès par la deuxième unité de planification d'instructions (124) ; et
envoyer des données correspondant à l'instruction d'accès vers la mémoire partagée (112) du premier module de calcul (A1) via le canal de transfert de données (C1) sur la base de la commande de transfert de données émise par la mémoire partagée (122) du deuxième module de calcul (A2), les données devant faire l'objet d'une interaction comprenant les données correspondant à l'instruction d'accès ; et
dans lequel le canal de transfert de données (C1) est en outre configuré pour :
envoyer l'instruction d'accès à la deuxième unité de planification d'instructions (124) par l'intermédiaire d'un canal de transfert de commandes (C2) établi entre la première unité de planification d'instructions (114) et la deuxième unité de planification d'instructions (124) par la première unité de planification d'instructions (114).

12. Appareil de traitement de données selon la revendication 11, comprenant en outre une unité de commande de mode, dans lequel l'unité de commande de mode est configurée pour :
recevoir un groupe de travail à répartir qui comprend le premier groupe de travail et le deuxième groupe de travail ;
déterminer un mode de répartition cible ; et
distribuer le groupe de travail à distribuer, sur la base du mode de distribution cible ;
optionnellement, le dispositif de traitement de données comprenant en outre une unité de stockage, ladite unité de stockage étant configurée pour stocker des informations de sélection de mode, lesdites informations de sélection de mode indiquant un type de mode sélectionné par un utilisateur ; et
l'unité de commande de mode est en outre configurée pour sélectionner, parmi au moins deux modes de répartition, un mode de répartition correspondant aux informations de sélection de mode en tant que mode de répartition cible.

13. Support de stockage lisible par ordinateur, stockant des instructions lisibles par ordinateur non transitoires, lesdites instructions lisibles par ordinateur non transitoires, lorsqu'elles sont exécutées par un appareil de traitement de données selon la revendication 11, mettent en œuvre le procédé de traitement de données selon l'une quelconque des revendications 1 à 10.
